# EUROPEAN PATENT APPLICATION

(11) **EP 1 246 109 A2**
(43) Date of publication of application: **02.10.2002**
(21) Application number: 02251575.3
(22) Date of filing: 06.03.2002
(51) Int. Cl.: G06F 17/60

(54) **System and method of managing returns**

(30) Priority: 30.03.2001 US 822583
(71) Applicant: NCR International, Inc., Dayton, Ohio 45479 (US)
(72) Inventor: Goodwin, John C. III, Suwanee, Georgia 30024 (US)
(74) Representative: Williamson, Brian

(57) **Abstract**

A system and method of managing product returns which interrogates radio frequency product labels affixed to a product. The system includes a radio frequency product label affixed to the product, a product label interrogator which obtains identification information from the radio frequency product label, and a computer which controls the product label interrogator, identifies the product, records operator authorization to add the product to inventory, and adjusts inventory records to reflect addition of the product to inventory.

## Description

The present invention relates to checkout systems, and more specifically to a system and method of managing time-sensitive products.

RFID technology provides an alternative to bar code reader technology for distinguishing and recording items for purchase.

Products with RFID labels must be managed. Therefore, it would be desirable to provide a system and method of managing returns of products bearing RFID labels.

In accordance with the teachings of the present invention there is provided a system and method of managing returns of products is provided.

The system includes a radio frequency product label affixed to the product, a product label interrogator which obtains identification information from the radio frequency product label, and a computer which controls the product label interrogator, identifies the product, records operator authorization to add the product to inventory, and adjusts inventory records to reflect addition of the product to inventory.

According to a further aspect of the present invention there is provided a method of managing product returns comprising the steps of:
interrogating a radio frequency product label on a product returned to a store;
identifying the product from information obtained from the radio frequency product label;
recording operator authorization to add the product to inventory; and
adjusting inventory records to reflect addition of the product to inventory.

According to a yet further aspect of the present invention there is provided a method of managing product returns comprising the steps of:
activating a radio frequency product label on a product returned to a store
interrogating the radio frequency product label;
identifying the product from information obtained from the radio frequency product label;
recording operator authorization to add the product to inventory; and
adjusting inventory records to reflect addition of the product to inventory.

According to a yet further aspect of the present invention there is provided a system for managing product returns comprising:
a radio frequency product label affixed to the product;
a product label interrogator which obtains identification information from the radio frequency product label; and
a computer which controls the product label interrogator, identifies the product, records operator authorization to add the product to inventory, and adjusts inventory records to reflect addition of the product to inventory.

According to a still further aspect of the present invention there is provided a system for managing product returns comprising:
a radio frequency product label affixed to the product;
a product label interrogator which obtains identification information from the radio frequency product label; and
a computer which controls the product label interrogator, identifies the product, determines whether the product was sold by the store, and, if the product was sold by the store, records operator authorization to add the product to inventory and adjusts inventory records to reflect addition of the product to inventory.

An embodiment of the present invention is described herein, with reference to the accompanying drawings, in which:
Fig. 1 is a block diagram of a transaction processing system; and
Fig. 2 is a flow diagram illustrating the method of the present invention.

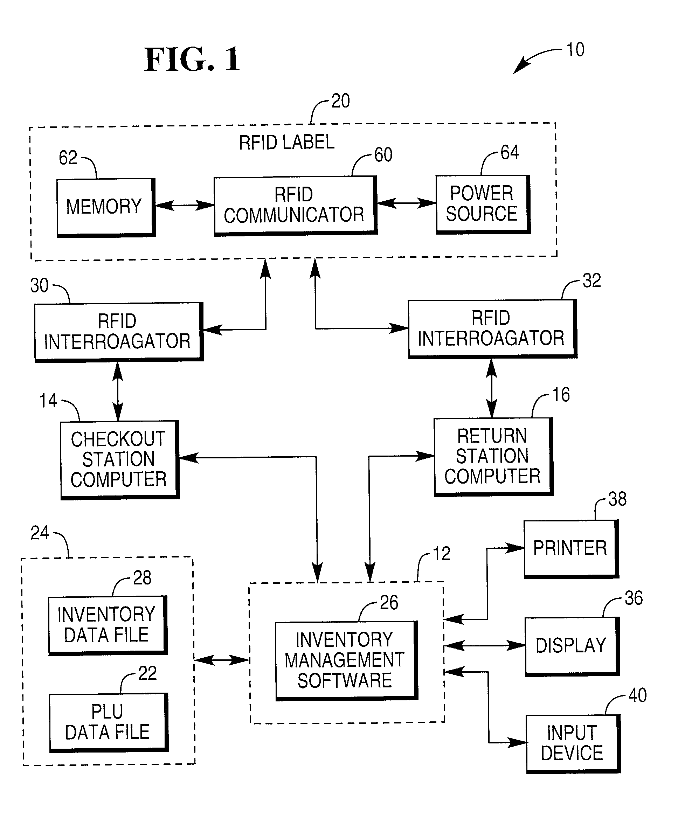

Referring now to Fig. 1, transaction system 10 primarily includes server 12, checkout station computer 14, and return station computer 16.

Server 12 handles price requests from checkout station computers 14 and maintains price information in PLU data file 22. PLU data file is stored within storage medium 24.

Server 12 also executes inventory management software 26 which tracks product inventory information. Inventory information is stored within inventory data file 28. Inventory data file 28 includes records for each item sold or previously sold in the store.

Inventory management software 26 provides reports which may be displayed by display 36 or printed by printer 38. A store employee may manage reporting and data entry through input device 40, which may include a keyboard.

To assist with execution of certain tasks performed by inventory management software 26, server 12 includes a built-in time keeping device, commonly referred to as a system clock, which is synchronized with current time, in order to automatically execute the tasks at their scheduled times.

Checkout station computer 14 uses RFID interrogator 30 to read RFID labels 20. Checkout station computer 14 sends item identification information from RFID labels 20 to server 12 with price requests. After receiving price information for the items from server 12, checkout station computer 14 completes a sale of the items by accepting payment. Checkout station computer 14 may also deactivate labels 20 if they are removed from the products. Checkout station computer 14 sends inventory adjustment information, removals from inventory, to server 12.

Return station computer 16 uses RFID interrogator 32 to read RFID labels 20. If labels 20 are temporary labels and need to be reattached to returned products, return station computer 16 reactivates labels 20. Return station computer 16 also sends inventory adjustment information, additions to inventory, to server 12.

RFID interrogators 30 and 32 may include RF transceivers.

RFID labels 20 may vary in size, depending upon product size, and may be visible or hidden when attached to products. RFID label 20 may be removably or permanently attached to products.

In one embodiment, RFID label 20 includes RFID communicator 60, memory 62, and power source 64. Label communicator 60 sends item identification and inventory date information stored in RFID memory 62 to RFID interrogators 30 and 32. RFID communicator 60 may include an RF transceiver.

Memory 62 stores item identification information and inventory information and may include a read-only memory (ROM) for one-time use, or a programmable ROM (EPROM) for repeated use. Memory 62 also stores identification information for distinguishing RFID labels 20 from each other.

Power source 64 may include a battery.

In another embodiment, RFID label 20 may be a passive label. Passive RFID labels use very little energy and may only include RFID communicator 60. Power may be derived from radio waves.

RFID communicator 60 may include a number of antennas, such as conductive ink antennas, which have frequencies which are unique among RFID labels 20. RFID communicator 60 communicates RFID label identification information which must be cross-referenced to obtain item identification information from a table. Adding RFID identification to the table would be a final step in reactivating the corresponding RFID label 20.

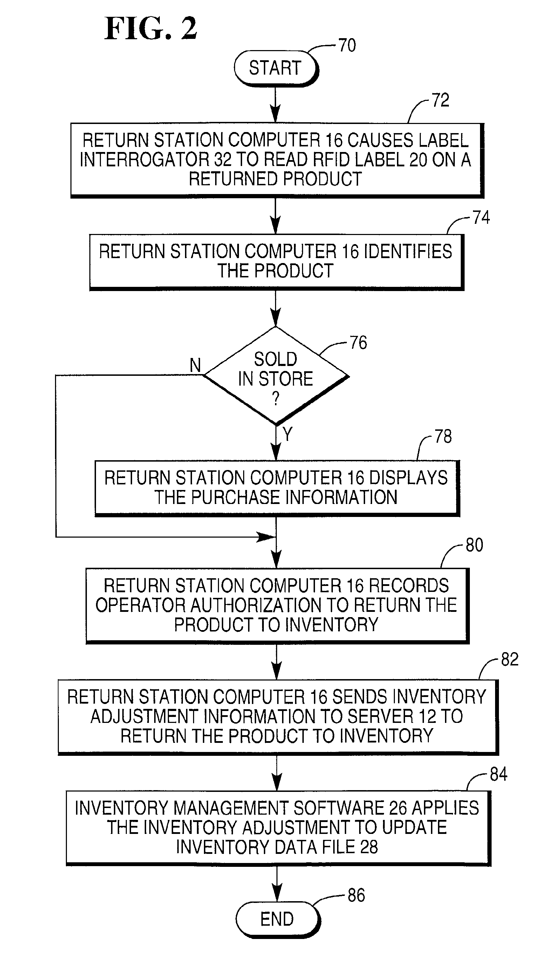

Turning now to Fig. 2, the method is illustrated in more detail beginning with START 70.

In step 72, return station computer 16 causes label interrogator 32 to read RFID label 20 on a returned product. Return station computer 16 activates RFID label 20 if it was deactivated at purchase.

In step 74, return station computer 16 identifies the item. In the case of active RFID labels 20, return station computer 16 obtains item identification information from memory 62. In the case of a passive RFID labels 20, return station computer 16 obtains RFID label identification information and looks up item identification information associated with the RFID label identification information.

In step 76, return station computer 16 determines whether the product was sold by the store or whether similar products are sold, if store name and purchase data are not stored in memory 62. Operation skips to step 80 if purchase information is not available.

In step 78, return station computer 16 displays the purchase information.

In step 80, return station computer 16 records operator authorization to return the product to inventory. The operator may wish to visually inspect the item before returning it to inventory.

In step 82, return station computer 16 sends inventory adjustment information to server 12 to return the product to inventory.

In step 84, inventory management software 26 applies the inventory adjustment information to update inventory data file 28.

Operation ends at step 86.

Although the present invention has been described with particular reference to certain preferred embodiments thereof, variations and modifications can be effected within the scope of the present invention.

## Claims

1. A method of managing product returns comprising the steps of:
interrogating a radio frequency product label on a product returned to a store;
identifying the product from information obtained from the radio frequency product label;
recording operator authorization to add the product to inventory; and
adjusting inventory records to reflect addition of the product to inventory.

2. A method of managing product returns comprising the steps of:
activating a radio frequency product label on a product returned to a store
interrogating the radio frequency product label;
identifying the product from information obtained from the radio frequency product label;
recording operator authorization to add the product to inventory; and
adjusting inventory records to reflect addition of the product to inventory.

3. A system for managing product returns comprising:
a radio frequency product label affixed to the product;
a product label interrogator which obtains identification information from the radio frequency product label; and
a computer which controls the product label interrogator, identifies the product, records operator authorization to add the product to inventory, and adjusts inventory records to reflect addition of the product to inventory.

4. A system for managing product returns comprising:
a radio frequency product label affixed to the product;
a product label interrogator which obtains identification information from the radio frequency product label; and
a computer which controls the product label interrogator, identifies the product, determines whether the product was sold by the store, and, if the product was sold by the store, records operator authorization to add the product to inventory and adjusts inventory records to reflect addition of the product to inventory.
